# EUROPÄISCHE PATENTSCHRIFT

(11) **EP 1 557 556 B1**
(45) Veröffentlichungstag und Bekanntmachung des Hinweises auf die Patenterteilung: **10.10.2007**
(21) Anmeldenummer: 05100083.4
(22) Anmeldetag: 10.01.2005
(51) Int. Cl.: F02M 37/22, F01M 11/04, F16K 11/02, B01D 35/16, B01D 36/00

(54) **Filter mit Betätigungseinrichtung zum Ablassen von abgeschiedenem Wasser**
Filter with actuating element for purging separated water
Filtre avec un élément d'actionnement pour vider l'eau séparée

(30) Priorität: 20.01.2004 DE 102004002833
(43) Veröffentlichungstag der Anmeldung: 27.07.2005
(73) Patentinhaber: ROBERT BOSCH GMBH, 70442 Stuttgart (DE)
(72) Erfinder: Garcia Blazquez, Ivan, 28033 Madrid (ES); Baz, Alfonso, 28290 Las Matas (ES); Parra, Alberto, 28022 Madrid (ES)

(56) Entgegenhaltungen:
- WO-A-03/035217
- WO-A-20/04007942
- US-A- 4 491 120
- US-A- 4 724 074
- US-A- 5 606 989
- US-A- 5 855 772
- US-A- 5 904 844
- US-B1- 6 565 746

## Beschreibung

Die Erfindung betrifft einen Filter, insbesondere Kraftstofffilter, mit einem Sumpf für abgeschiedenes Wasser und einem am Sumpf angeordneten, unteren Ventil zum Ablassen von Wasser, einem mit der Umgebung des Filters in Verbindung stehenden oberen Ventil und einer Betätigungseinrichtung zum Betätigen des oberen und des unteren Ventils. Die Erfindung betrifft auch eine Betätigungseinrichtung für einen solchen Filter.

Aus der DE 101 35 592 A1 ist ein Kraftstofffilter bekannt, bei dem in einem unteren Bereich des Gehäuses ein Wasserspeicherraum zum Sammeln von aus dem Kraftstoff abgetrenntem Wasser vorgesehen ist. Im Boden des Gehäuses ist ein Wasserablassventil und im Deckel eine verschließbare Öffnung für Zuluft vorgesehen. Sowohl das Wasserablaufventil als auch die Zuluftöffnung werden durch ein Stabteil mit einem Wassersensor betätigt. Das Stabteil ist mittels eines Federringes am oberen Deckel befestigt. Nach Entfernen des Federringes kann das Stabteil entnommen werden, wodurch das untere Wasserablaufventil geöffnet und die Zuluftöffnung freigegeben wird. Das Abfließen des Wassers wird dabei durch den durch die Zuluft bedingten Druckausgleich im Gehäuse erleichtert.

Des Weiteren ist in der WO 03/035217 A1 ein Kraftstofffilter mit einem am Boden eines Sumpfs für abgeschiedenes Wasser angeordneten Wasserablassventil und einem am Deckel des Filters über dem Wasserablassventil angeordneten Belüftungsventil offenbart. Beide Ventile können über eine Stange betätigt werden, indem eine am Stangenkopf angeordnete Schraube gedreht wird. Dadurch werden das Wasserablassventil und das Belüftungsventil gleichzeitig geöffnet, so dass das im Filter vorhandene Wasser abgelassen werden und gleichzeitig Luft zum Druckausgleich nachströmen kann.

Beiden Filtern haftet der Nachteil an, dass beim Ablassen von Wasser zwingend Luft in den Filter gelangt, die nicht ohne Weiteres entfernt werden kann.

In der GB 157,669 ist ein Filter mit einem automatischen Ventil beschrieben, durch das beim Öffnen des Filtergehäuses automatisch die Zufuhr von Kraftstoff abgestellt wird. Dazu ist eine vorbelastete Feder vorgesehen, die das Ventil beim Abschrauben einer Verschlusskappe in seine Verschlussstellung bringt, so dass kein Kraftstoff mehr nachfließen kann. Ein Ventil zum gezielten Ablassen von Wasser ist in der GB 157,669 nicht offenbart.

Die WO 2004/007942, die nach dem Anmeldetag veröffentlicht ist und eine ältere Priorität aufweist, offenbart ein Abfluß- und Belüftungsventil, die star über einen Stab miteinander verkuppelt sind.

Der Erfindung liegt die Aufgabe zugrunde, einen Filter der eingangs genannten Art zur Verfügung zu stellen, bei dem der Nachteil von nach dem Ablassen von Wasser im Filter verbleibender Luft vermieden werden kann, und der bei Variation der Länge preis günstig hergestellt werden kann.

Diese Aufgabe wird mit einem Filter mit den Merkmalen des Anspruchs 1 gelöst.

Der Grundgedanke der Erfindung besteht darin, das mit der Umgebung in Verbindung stehende Ventil des Filters nicht nur zur Belüftung des Filters beim Ablassen von Wasser, sondern auch zum Entlüften des Filters zu nutzen. Hierzu ist es notwendig, dass insbesondere das obere Ventil unabhängig vom unteren Ventil geöffnet werden kann.

Wird nur das untere Ventil geöffnet, kann beispielsweise im Druckbetrieb, bei dem eine Kraftstoffpumpe in Flussrichtung des Kraftstoffs vor dem Kraftstofffilter angeordnet ist, kann aus dem Filter Wasser abgelassen werden, ohne dass überhaupt das obere Ventil geöffnet werden muss, da das Wasser automatisch aus dem Filter herausgedrückt wird. In diesem Fall dringt beim Ablassen des Wassers überhaupt keine Luft in den Filter ein.

Soll der Filter im Saugbetrieb, bei dem die Kraftstoffpumpe in Flussrichtung des Kraftstoffs hinter dem Filter angeordnet ist, oder bei abgestellter Kraftstoffpumpe im Ruhezustand entwässert werden, können zum Ablassen des Wassers sowohl das obere als auch das untere Ventil geöffnet werden. Wenn das Wasser vollständig abgelassen wurde, kann das untere Ventil dann geschlossen werden, während das obere Ventil noch geöffnet bleibt, so dass der Filter nach dem Ablassen des Wassers noch entlüftet werden kann und das obere Ventil erst nach einer Entlüftung verschlossen wird. In diesem Zusammenhang ist es grundsätzlich unerheblich, ob das obere Ventil im Deckel des Filters direkt oberhalb des Wasserablassventils oder dazu versetzt, gegebenenfalls auch in der Seitenwandung des Filters angeordnet ist, solange gewährleistet ist, dass durch das obere Ventil ein Luftaustausch mit der Umgebung stattfinden kann.

In einer einfachen Ausführungsform der Erfindung kann hierzu die Betätigungseinrichtung ebenso wie beim vorbekannten Stand der Technik stabförmig und mit Ventilverschlüssen oder mit Mitteln zum Betätigen von Ventilen ausgebildet sein, wobei die Ventilsitze des oberen und des unteren Ventils so ausgebildet sind, dass in einer Position der Betätigungseinrichtung beide Ventile geschlossen sind, in einer anderen Position jeweils wahlweise nur das obere, das untere oder aber beide Ventile geöffnet sind. Eine mögliche Ausführungsform kann dergestalt sein, dass eine stabförmige Betätigungseinrichtung um seine Längsachse rotierbar ist, und ein Rotieren der Betätigungseinrichtung aus einer Schließposition, in der beide Ventile verschlossen sind, in die eine Richtung zunächst das Öffnen des unteren und bei weiterer Rotation in die gleiche Richtung zusätzlich das Öffnen des oberen Ventils bewirkt, und ein Rotieren aus der Schließposition in die andere Richtung zunächst das Öffnen des oberen Ventils und danach das zusätzliche Öffnen des unteren Ventils bewirkt. Diese Wirkung kann beispielsweise erzielt werden, wenn die Betätigungseinrichtung in einem Gewinde gelagert ist, wobei die Betätigungseinrichtung durch die Rotation in die eine Richtung aufwärts und durch die Rotation in die andere Richtung abwärts bewegt wird, wodurch unterschiedliche Ventilöffnungen in den Ventilsitzen freigegeben werden.

Die Aufgabe der Erfindung besteht darin, eine Betätigungseinrichtung für einen solchen Filter zur Verfügung zu stellen, die ein Ablassen von Wasser und eine Entlüftung des Filters ermöglicht, und der preis günstig bei Variation der Länge hergestellt werden kann.

In der Regel ist das erste Teil auch oben angeordnet, während das zweite Teil unten angeordnet wird. Es sind aber auch Ausgestaltungen möglich, bei denen ein inneres und ein äußeres Teil oder ein rechtes und ein linkes Teil oder Kombinationen daraus miteinander verbunden sind.

Es kann von Vorteil sein, wenn das erste Teil einen Schraubenkopf aufweist, der vorzugsweise im bestimmungsgemäßen Einbau von außerhalb des Filters zugänglich ist. So kann die Betätigungseinrichtung einerseits mit einem Werkzeug gegriffen werden, damit das erste Teil in den Filter eingeschraubt bzw. herausgeschraubt werden kann, wenn ein entsprechendes Gewinde am Filter vorgesehen ist. Darüber hinaus ist ein Positionieren der Betätigungseinrichtung in unterschiedliche Betriebspositionen über die Schraubverbindung mit dem Filtergehäuse auf einfache Weise möglich und kann gegebenenfalls sogar mit Hilfe eines Motors erfolgen.

Auch ist es gerade in dem Fall, wenn durch ein Verschieben der die Ventile verschließenden Teile innerhalb des Ventilsitzes unterschiedliche Öffnungen freigegeben werden, aber nicht nur dann von Vorteil, wenn die Dichteinrichtung für das Ventil am das Ventil verschließbaren Teil der Betätigungseinrichtung angeordnet ist und beispielsweise als O-Ring ausgebildet ist, da in diesem Fall der abgedichtete Bereich innerhalb des Ventils durch Verschieben der Betätigungseinrichtung verändert wird. Die Betätigungseinrichtung kann wahlweise mit einer solchen Dichteinrichtung nur für das obere, nur für das untere oder mit Dichtungseinrichtungen für beide Ventile versehen sein.

In einer anderen Weiterbildung der Erfindung sind das erste Teil und das zweite Teil in mindestens einem Freiheitsgrad, insbesondere in Richtung ihrer Längsachsen, relativ zueinander beweglich sind. Vorzugsweise ist das erste Teil gegenüber dem zweiten Teil wenigstens verschieblich und/oder verdrehbar angeordnet, um eine Bewegung relativ zueinander zu ermöglichen. Eine solche Ausgestaltung ist sehr vorteilhaft, da dadurch eine einfache Möglichkeit besteht, die Ventile selektiv zu betätigen.

Grundsätzlich kann die Bewegung eines der beiden Teile durch Verschieben oder durch ein Verdrehen erfolgen. Bevorzugt ist eine axiale Beweglichkeit, d.h. eine Beweglichkeit entlang einer Längsachse der Betätigungseinrichtung, die bevorzugt insgesamt im Wesentlichen eine langgestreckte Form aufweist. Die axiale Beweglichkeit kann durch ein Verschieben oder auch durch ein Verdrehen, beispielsweise durch einen Schraubvorgang hervorgerufen werden.

Die relative Bewegungsfreiheit des ersten und des zweiten Teils der Betätigungseinrichtung zueinander wird vorzugsweise auf eine bestimmte Distanz begrenzt. Hierdurch wird ermöglicht, dass erst ein Teil bis zu einer bestimmten Position alleine betätigt werden kann, und dass bei einer weiteren Bewegung über diese Position hinaus gleichzeitig der andere Teil der Betätigungseinrichtung simultan mitbetätigt wird, so dass zunächst nur ein Ventil und danach auch das andere Ventil betätigt wird. Somit ist es aber auch möglich, dass das eine Ventil in eine Stellung bringbar und anschließend wieder zurückstellbar ist, ohne dass das andere Ventil seine Stellung ändert.

Der besondere Vorteil dieser Ausgestaltung der Erfindung besteht unter anderem auch darin, dass die Ventilsitze einfacher aufgebaut und die Dichtungen einfach am Ventilsitz vorgesehen sein können. Auch können die Anforderungen an Fertigungstoleranzen bei solchen Betätigungseinrichtungen erheblich herabgesetzt werden, da es nicht mehr auf den genauen Abstand des ersten und des zweiten das obere bzw. untere Ventil verschließenden Teils und eine genaue Positionierung der Dichtungen an den Teilen ankommt. So kann auch der Abstand zwischen unterem und oberen Ventil in gewissem Maße ausgeglichen werden, was beispielsweise bei dem aus der WO 03/035217 A1 bekannten Kraftstofffilter in der Form nicht möglich ist. Das gilt auch für kleinere Schäden wie Beulen oder Ausbuchtungen am Filtergehäuse. Weiterhin können Fehler beim Fluchten der Öffnungen des oberen und unteren Ventils im gewissen Rahmen ohne Verformungen an der zweiteiligen Einrichtung ausgeglichen werden.

Gemäß der Erfindung weist die Kupplung weiterhin einen Rastmechanismus auf, so dass das erste und das zweite Teil zusammengesteckt werden können und danach nicht ohne Lösen des Rastmechanismus voneinander lösbar sind. Dieser kann am ersten oder am zweiten Teil oder an beiden Teilen ausgebildet sein.

Vorzugsweise ist wenigstens ein Rastelement an wenigstens einem Eingriffsabschnitt vorgesehen. Durch die Verwendung eines Rastmechanismus wird nicht nur die Montage von relativ zueinander beweglichen ersten und zweiten Teilen vereinfacht. Es ergibt sich auch ein Vorteil bei der Herstellung von Betätigungseinrichtungen mit starr gekoppelten ersten und zweiten Teilen, die nicht zwingend einstückig ausgebildet sein müssen. So können bei der Variation der Länge nur eines der beiden Teile auf einfache Weise Betätigungseinrichtungen mit unterschiedlicher Länge hergestellt werden.

Eine andere bevorzugte Weiterbildung der Erfindung besteht darin, dass die Kupplung eine mit dem ersten oder zweiten Teil verbundene Hülse und einen mit dem anderen Teil verbundenen Kolben, der in die Hülse eingreift, aufweist. Hierdurch ist das erste oder das zweite Teil in das jeweils andere Teil über wenigstens einen Abschnitt einführbar. Sind Hülse und Kolben mit einem Rastmechanismus ausgebildet, kann der Kolben als Bestandteil des einen Teils der Betätigungseinrichtung in der Hülse über einen bestimmten Abschnitt in Richtung der Längsachse verschiebbar sein und dennoch zur Betätigung des anderen Teils verwendet werden. Eine andere Wirkungsweise der Hülse besteht in dem Ausgleich von Maßtoleranzen bei der Filterherstellung, wobei die Betätigung der Ventile durch den ersten und den zweiten Teil der Betätigungseinrichtung in einer anderen Richtung als der Längsachse erfolgt. Dies kann insbesondere durch Drehung der Betätigungseinrichtung um die Längsachse der Hülse erfolgen, wobei in diesem Fall an der Außenseite des Kolbens mindestens ein Steg vorgesehen sein muss, der mit mindestens einem Anschlag innerhalb der Hülse zusammenwirkt.

Als Werkstoff für die erfindungsgemäße Einrichtung kommen die üblichen im Stand der Technik bekannten Werkstoffe in Frage. Bevorzugt ist der Einsatz von Kunststoff. Damit ist auch der Rast- oder Klickmechanismus einfach herstellbar. Das Zusammenfügen des ersten und des zweiten Teils ist bei Verwendung von Kunststoff gut möglich.

Weitere Vorteile und Anwendungsmöglichkeiten der vorliegenden Erfindung ergeben sich aus dem bevorzugten Ausführungsbeispiel, das im Folgenden mit Bezug auf die Figuren beschrieben wird.

Es zeigen
- Figur 1: einen Ausschnitt eines Längsschnitts durch einen Kraftstofffilter mit einem oberen und einem unteren Ventil sowie einer Betätigungseinrichtung;
- Figur 2: ein oberes und ein unteres Teil der Betätigungseinrichtung aus Figur 1;
- Figur 3: den schrittweisen Ablauf beim Öffnen der Ventile des Kraftstofffilters aus Figur 1; und
- Figur 4: den schrittweisen Ablauf beim Schließen der Ventile des Kraftstofffilters aus Figur 1.

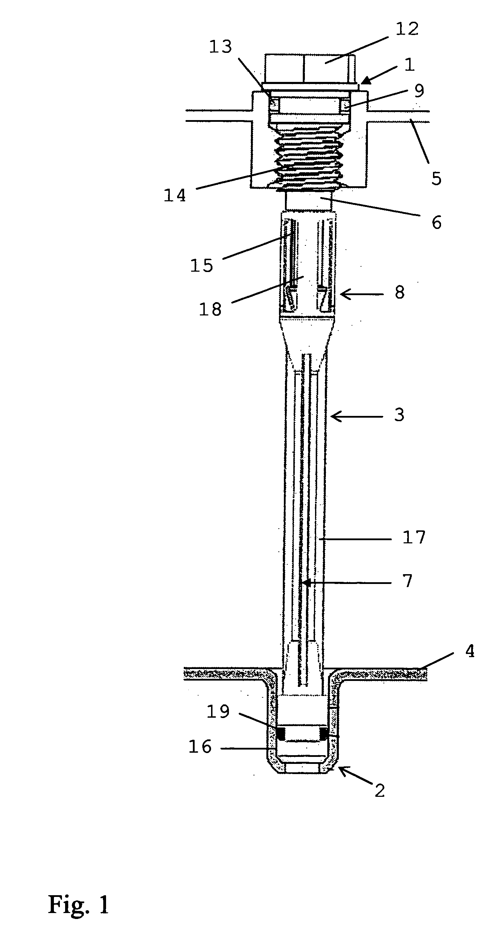

In Figur 1 ist ein Teil eines Kraftstofffilters mit einem oberen Ventil **1** und einem unteren Ventil **2** dargestellt, die durch eine Betätigungseinrichtung **3** verschlossen sind, wobei das untere Ventil **2** im Boden **4** des Kraftstofffilters und damit im Bereich des Sumpfs für innerhalb des Filters aus dem Kraftstoff abgeschiedenes Wasser angeordnet ist, und das obere Ventil **1** im Deckel **5** des Kraftstofffilters über dem unteren Ventil **2** angeordnet ist und als Belüftungs- bzw. Entlüftungsventil dient.

Die Betätigungseinrichtung **3** umfasst ein das obere Ventil **1** verschließende erstes Teil **6** und ein das untere Ventil **2** verschließende zweites Teil **7**, die über eine Kupplung **8** miteinander verbunden sind.

Das obere Ventil ist mit einem Ventilsitz **9** und einem darunter angeordneten Schraubgewinde **11** ausgebildet. Dementsprechend ist das erste Teil **6** der Betätigungseinrichtung mit einem Schraubenkopf **12**, einer darunter angeordneten und mit dem Ventilsitz **9** zusammenwirkenden Dichtung **13**, einem darunter angeordneten und mit dem Schraubgewinde **11** zusammenwirkenden Schraubenbolzenstück **14** sowie einem sich daran anschließenden Kupplungsstück **15** ausgebildet.

Das untere Ventil **2** weist einen Ventilsitz **16** auf, die als nach unten gerichtete, hohlzylindrische Auswölbung im Boden **4** des Kraftstofffilters ausgebildet und als Wasserablass unten offen ist. Der zweite Teil **7** der Betätigungseinrichtung **3** ist als Ventilstange **17** mit einem Kupplungsstück **18** an ihrem oberen Ende sowie einer O-Ringartigen Dichtung **19** an ihrem unteren, in den Ventilsitz **16** eingreifenden Ende ausgebildet.

Die Anordnung der Ventile **1**, **2** und der Betätigungseinrichtung **3** erfolgt üblicherweise, aber nicht zwingend, senkrecht innerhalb eines Kraftstofffiltergehäuses, wobei die Anordnung je nach Art des verwendeten Filtereinsatzes auf der Schmutz- oder auf der Reinseite des Filtereinsatzes liegen kann.

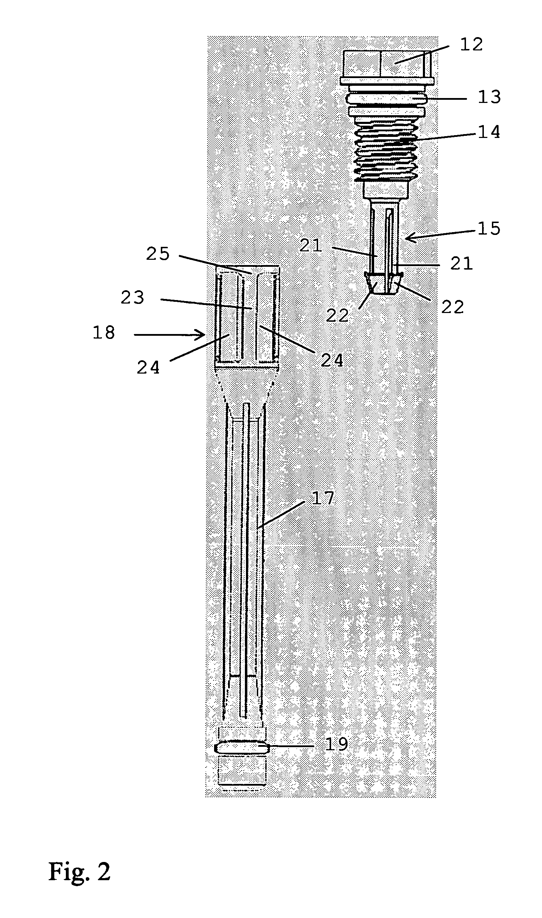

In Figur 2 sind die beiden Teile der Betätigungseinrichtung **3** in getrenntem Zustand jeweils in Seitenansicht dargestellt. Das Kupplungsstück **15** des ersten Teils **6** der Betätigungseinrichtung **3** weist vier nach unten gerichtete, in Umfangsrichtung nebeneinander angeordnete Stege **21** mit an ihren freien Enden angeordneten, nach außen gerichteten Rastnasen **22** auf. Sie wirken als Rastmechanismus mit dem Kupplungsstück **18** des zweiten Teils **7** zusammen, das als konzentrisch zur Längsachse der Betätigungseinrichtung **3** verlaufende Hülse **23** mit vier in ihrer Seitenwand ausgebildeten Schlitzen **24** ausgebildet ist, die nach oben durch einen als Anschlag wirkenden, umlaufenden Ringsteg **25** der Hülse **23** begrenzt sind.

In verbundenem Zustand greifen die Rastnasen **22** in die Schlitze **24** ein, so dass der erste Teil **6** und der zweite Teil **7** beweglich miteinander verbunden sind, wobei die Relativbewegung durch die Oberkanten und Unterkanten der Schlitze begrenzt ist und insbesondere ein Lösen der beiden Teile **6**, **7** durch den als Anschlag wirkenden Ringsteg **25** unterbunden wird.

Eine andere mögliche Ausführungsform der Kupplung besteht darin, dass die Rastnasen **22** nicht in Schlitze **24** eingreifen, sondern in eine Abschlusskante des Kupplungsstücks **18** des zweiten Teils der Betätigungseinrichtung **3** einklicken. Dazu kann an dem Ende des im Wesentlichen hülsenförmigen Kupplungsstücks **18** der freie Durchmesser verringert sein, so dass die Stege **21** beim Einführen des Kupplungsstücks **15** des ersten Teils **6** der Betätigungseinrichtung **3** elastisch verformt werden, um nach dem Durchgang durch die verengte Stelle aufzuschnappen. Damit ist das Kupplungsstück **15** verliersicher mit dem Kupplungsstück 18 verbunden.

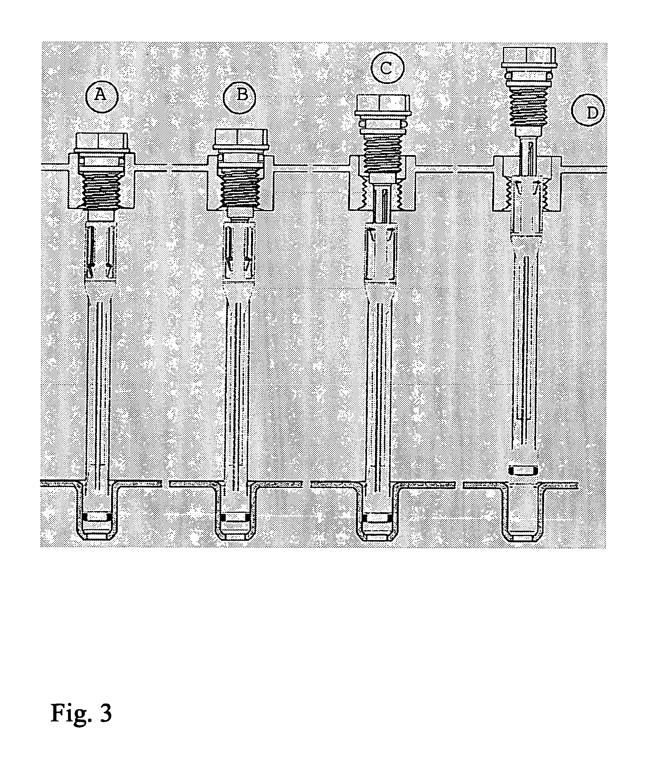

In Figur 3 ist in einzelnen Darstellungen "A", "B", "C", "D" die nacheinanderfolgende Betätigung der beiden Ventile dargestellt.

Bei der ersten mit "A" bezeichneten Darstellung schließen der erste Teil **6** der Betätigungseinrichtung **3** mit der Dichtung **13** den Ventilsitz 9 des oberen Ventils **1** und die Dichtung **19** den Ventilsitz **16** des unteren Ventils **2** jeweils dicht ab. Damit ist die Betätigungseinrichtung in der Betriebsposition, in der der Kraftstofffilter zur Filtrierung von Kraftstoff verwendet wird.

Bei der Darstellung gemäß "B" wurde das erste Teil **6** der Betätigungseinrichtung **3** ein wenig aus seiner Position herausgeschraubt, aber die Dichtung **10** sitzt noch dicht im oberen Ventil **2**. An der Stellung der Ventilstange **17** hat sich nichts geändert.

In der Darstellung "C" wurde das erste Teil **6** der Betätigungseinrichtung **3** weiter herausgeschraubt und herausgezogen, so dass das obere Ventil **2** geöffnet ist und das Filterinnere mit der Umgebung in Verbindung steht. Die Position der Ventilstange **17** ist weiterhin unverändert. Allerdings liegen jetzt die Rastnasen **22** des Kupplungsstücks **15** des ersten Teils **6** der Betätigungseinrichtung **3** am Ringsteg **25** der Hülse **23** des zweiten Teils **7** an, so dass der erste Teil 6 und der zweite Teil **7** den maximalen Abstand zueinander erreicht haben.

Wird nun die Belüftungsschraube **8** weiter herausgezogen, so kann der in Darstellung "D" gezeigte Zustand eintreten. Durch das weitere Herausziehen des ersten Teils **6** wird die Ventilstange **13** aus dem Ventilsitz **16** des unteren Ventils 2 herausgezogen. Dadurch wird das untere Ventil betätigt, d.h. es wird geöffnet. Es kann Wasser bzw. Flüssigkeit abströmen.

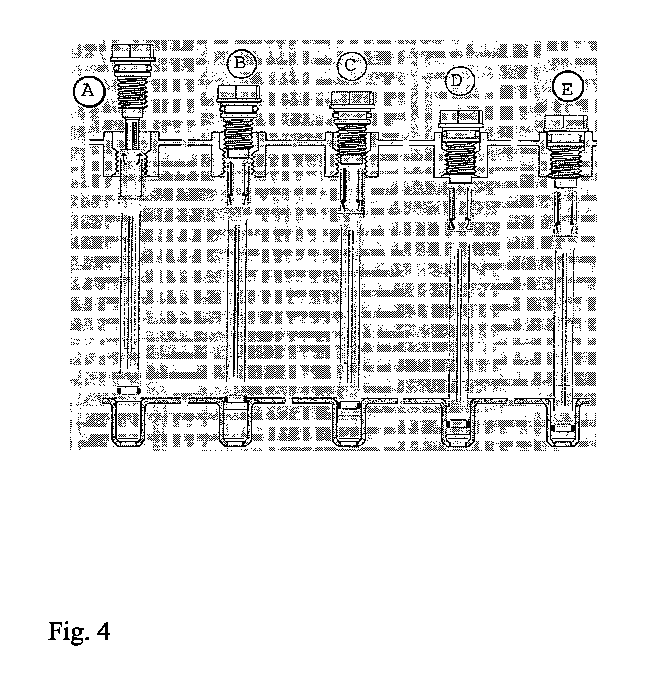

Die Schritte eines anschließenden Schließens der Ventile sind in Figur 4 mit den Buchstaben "A", "B", "C", "D" und "E" bezeichnet. Bei "A" ist der Zustand nach vollständigem Ausbau der Betätigungseinrichtung **3** gezeigt. Sowohl oberes Ventil **1** als auch unteres Ventil **2** sind geöffnet.

Wird die Betätigungseinrichtung, wie in Darstellung "B" der Figur 4 abgebildet, in Richtung zum unteren Ventil **2** bewegt, stößt die Dichtung **19** am Ventilsitz **16** an, und der erste Teil **6** der Betätigungseinrichtung **3** kann solange unabhängig vom zweiten Teil **7** nach unten bewegt werden, bis das untere Ende der Rastnasen **22** am Boden der Hülse **23** anstößt.

Wird die Betätigungseinrichtung **3**, weiter hinabgedrückt, wird das untere Ventil **2** durch die Dichtung **19** der dann in den Ventilsitz **16** eingreifenden Ventilstange **17**, wie in Darstellung "C" zu sehen ist, verschlossen, wobei das obere Ventil 1 weiterhin geöffnet ist.

Erst wenn das Schraubenbolzenstück des ersten Teils **6** der Betätigungseinrichtung in das Schraubgewinde **11** eingeschraubt wird, erreicht die Dichtung **13** den Ventilsitz **9** des oberen Ventils **1** und verschließt ihn, wie insbesondere in den Darstellungen "D" und "E" zu sehen ist, wobei die Betätigungseinrichtung **3** in Zustand "E" nach vollständigem Einschrauben die Position für den Betrieb des Filters wieder eingenommen hat.

## Patentansprüche

1. Filter, insbesondere Kraftstofffilter, mit einem Sumpf für abgeschiedenes Wasser und einem am Sumpf angeordneten, unteren Ventil (2) zum Ablassen von Wasser, einem mit der Umgebung des Filters in Verbindung stehenden, oberen Ventil (1) und einer Betätigungseinrichtung (3) zum Betätigen des oberen und des unteren Ventils (1, 2), **gekennzeichnet durch** Mittel, die ein voneinander unabhängiges Öffnen der Ventile (1, 2) ermöglichen, und **durch** ein erstes, das obere Ventil verschließendes Teil (6), wenigstens ein zweites, das untere Ventil verschließendes Teil (7) sowie mindestens eine Kupplung (8), über die das erste und das zweite Teil (6, 7) miteinander verbunden sind, wobei Kupplung (8) einen Rastmechanismus (21, 22, 23, 24) aufweist.

2. Betätigungseinrichtung (3) für einen Filter nach Anspruch 1, **dadurch gekennzeichnet, dass** das erste Teil (6) einen Schraubenkopf (12) aufweist.

3. Betätigungseinrichtung (3) für einen Filter nach Anspruch 1 oder 2, **gekennzeichnet durch** eine an ihrem ersten Teil (6) angeordnete obere Dichteinrichtung (13), insbesondere ein O-Ring.

4. Betätigungseinrichtung (3) für einen Filter nach einem der Ansprüche 1 bis 3, **gekennzeichnet durch** eine an ihrem zweiten Teil (7) angeordnete untere Dichteinrichtung (19), insbesondere ein O-Ring.

5. Betätigungseinrichtung (3) für einen Filter nach einem der Ansprüche 1 bis 4, **dadurch gekennzeichnet, dass** das erste Teil (6) und das zweite Teil (7) in mindestens einem Freiheitsgrad, insbesondere in Richtung ihrer Längsachsen, relativ zueinander beweglich sind.

6. Betätigungseinrichtung (3) nach Anspruch 5, **dadurch gekennzeichnet, dass** die Kupplung die Bewegungsfreiheit des ersten und des zweiten Teils (6, 7) zueinander auf eine bestimmte Distanz begrenzt.

7. Betätigungseinrichtung (3) für einen Filter nach einem der Ansprüche 1 bis 6, **dadurch gekennzeichnet, dass** die Kupplung eine mit dem ersten oder zweiten Teil (6, 7) verbundene Hülse und einen mit dem anderen Teil (7, 6) verbundenen Kolben, der in die Hülse (17) eingreift, aufweist.

## Claims

1. Filter, in particular fuel filter, having a sump for separated water and having a lower valve (2), which is arranged on the sump, for discharging water, having an upper valve (1) which is connected to the surroundings of the filter and having an actuating device (3) for actuating the upper and lower valves (1, 2), **characterized by** means which allow the valves (1, 2) to be opened independently of one another, and by a first part (6) which closes off the upper valve, at least one second part (7) which closes off the lower valve, and at least one coupling (8) by means of which the first and the second parts (6, 7) are connected to one another, wherein the coupling (8) has a latching mechanism (21, 22, 23, 24).

2. Actuating device (3) for a filter according to Claim 1, **characterized in that** the first part (6) has a bolt head (12).

3. Actuating device (3) for a filter according to Claim 1 or 2, **characterized by** an upper sealing device (13), in particular an O-ring, arranged on its first part (6).

4. Actuating device (3) for a filter according to one of Claims 1 to 3, **characterized by** a lower sealing device (19), in particular an O-ring, arranged on its second part (7).

5. Actuating device (3) for a filter according to one of Claims 1 to 4, **characterized in that** the first part (6) and the second part (7) are moveable relative to one another in at least one degree of freedom, in particular in the direction of their longitudinal axes.

6. Actuating device (3) according to Claim 5, **characterized in that** the coupling limits the freedom of movement of the first and second parts (6, 7) relative to one another to a defined distance.

7. Actuating device (3) for a filter according to one of Claims 1 to 6, **characterized in that** the coupling has a sleeve, which is connected to the first or second part (6, 7), and a piston which is connected to the other part (7, 6) and engages into the sleeve (17).

## Revendications

1. Filtre, notamment filtre à carburant, comportant un puisard pour l'eau séparée ainsi qu'une soupape inférieure (2) associée au puisard pour l'évacuation de l'eau, une vanne supérieure (1') en liaison avec l'environnement du filtre et une installation d'actionnement (3) pour actionner la vanne supérieure et la vanne inférieure (1, 2),
**caractérisé par**
des moyens permettant l'ouverture indépendante des vannes (1, 2) et par une première partie (6) fermant la vanne supérieure, au moins une seconde partie (7) fermant la vanne inférieure, ainsi qu'au moins un accouplement (8) reliant la première et la seconde partie (6, 7), l'accouplement (8) comportant un mécanisme d'encliquetage (21, 22, 23, 24).

2. Installation d'actionnement (3) pour un filtre selon la revendication 1,
**caractérisée en ce que**
la première partie (6) comporte une tête de vis (12).

3. Installation d'actionnement (3) pour un filtre selon l'une quelconque des revendications 1 ou 2,
**caractérisée en ce que**
une installation d'étanchéité (13) supérieure notamment un joint torique équipe la première partie (6).

4. Installation d'actionnement (3) pour un filtre selon l'une quelconque des revendications 1 à 3,
**caractérisée par**
une installation d'étanchéité (19) inférieure notamment un joint torique équipe sur la seconde partie (7).

5. Installation d'actionnement (3) pour un filtre selon l'une quelconque des revendications 1 à 4,
**caractérisée en ce que**
la première partie (6) et la seconde partie (7) sont mobiles l'une par rapport à l'autre avec au moins un degré de liberté notamment dans la direction de leur axe longitudinal.

6. Installation d'actionnement (3) selon la revendication 5,
**caractérisée en ce que**
l'accouplement limite la liberté de mouvement de la première et de la seconde partie (6, 7) l'une par rapport à l'autre, sur une distance donnée.

7. Installation d'actionnement (3) pour un filtre selon l'une quelconque des revendications 1 à 6,
**caractérisée en ce que**
l'embrayage comporte un manchon relié à la première ou à la seconde partie (6, 7) et un piston pénétrant dans le manchon (17) est relié à l'autre partie (6, 7).
